# EUROPEAN PATENT APPLICATION

(11) **EP 2 233 911 A1**
(43) Date of publication of application: **29.09.2010**
(21) Application number: 09704902.7
(22) Date of filing: 09.01.2009
(51) Int. Cl.: G01N 17/00, G01N 3/34

(54) **FATIGUE TESTING METHOD IN HYDROGEN GAS**

(30) Priority: 22.01.2008 JP 2008011048
(71) Applicant: National Institute of Advanced Industrial Science And Technology, Tokyo 100-8921 (JP)
(72) Inventor: MATSUOKA, Saburo, Fukuoka-shi Fukuoka 819-0395 (JP); MURAKAMI, Yukitaka, Fukuoka-shi Fukuoka 819-0395 (JP); KANEZAKI, Toshihiko, Fukuoka-shi Fukuoka 819-0395 (JP)
(74) Representative: Müller, Frank
(86) International application number: PCT/JP2009/050196
(87) International publication number: WO 2009/093488

(57) **Abstract**

There is provided a fatigue test method with which the crack growth can be checked for a plurality of cycle rates in a single test. At a first cycle rate f₁ of 0.01 Hz, hydrogen has a greater effect on crack growth than at a second cycle rate f₂ of 1 Hz. As a result, an area of large hydrogen effect (an area developed at the cycle rate f₁) and an area of small hydrogen effect (an area developed at the cycle rate f₂) appear alternately on the fatigue fracture surface, and since these two areas have different fracture surface morphologies, it is possible to see the boundary lines. Consequently, the lengths of the cracks developed under each set of conditions can be specified, and a fatigue crack growth curve can be acquired for each set of conditions.

## Description

### TECHNICAL FIELD

This invention relates to a fatigue test method for specifying the length of cracks developed under specific conditions from the fatigue fracture surface of a test piece.

### BACKGROUND ART

As discussed in Patent Document 1, a conventional fatigue test method for checking the crack growth imparted to a test piece involved making a beach mark on the test piece. A beach mark is usually made by the following procedure.

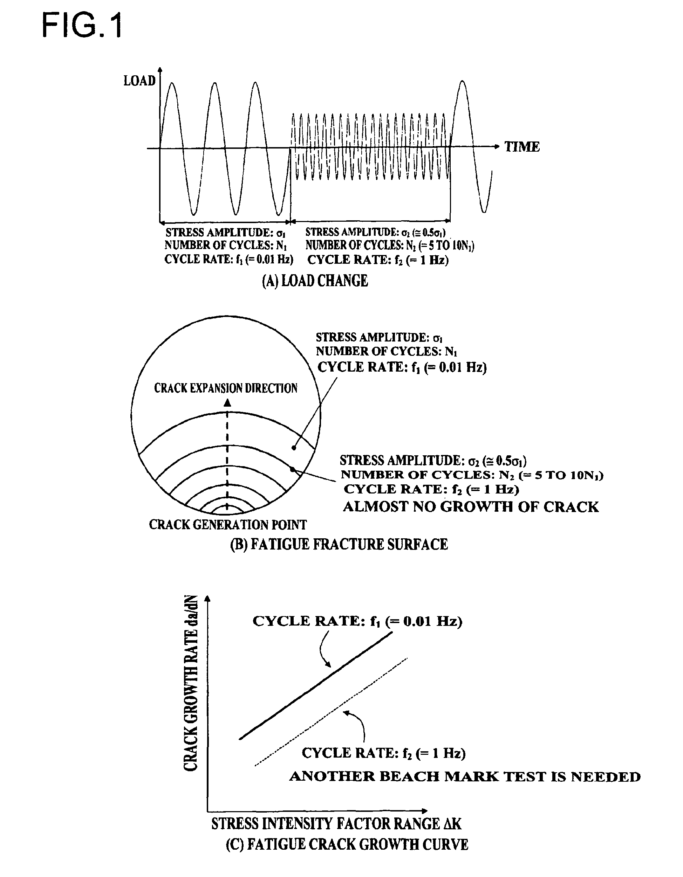

First, a crack is formed on the surface of the test piece. Then, as shown in FIG. 1(a), a load is imparted at a specific number of cycles, a specific stress amplitude, and a specific cycle rate at which this crack will grow. In the example in FIG. 1(a), the cycle rate is f₁ (= 0.01 Hz), the stress amplitude is σ₁, and the number of cycles is N₁.

Next, in making the beach mark, the cycle rate and/or the stress amplitude is changed to a value that is different from that in the first set of conditions mentioned above, and the load is imparted. In the example in FIG. 1(a), the cycle rate is f₂ (= 1 Hz), the stress amplitude is σ₂ (= 0.5σ₁), and the number of cycles is N₂ (= 5 to 10N₁), with the values of both the cycle rate and the stress amplitude being different. The cycle rate and stress amplitude here are set to values in a range in which almost no crack growth occurs. This is because if the crack growth rate is decreased too much, there will be a large quantity of fretting oxide formed, which is due to repeated contact with the fracture surface. This fretting oxide is visible as a long, black beach mark along the crack front produced during a change in load condition.

When loads are imparted alternately under the two different load conditions mentioned above, as shown in FIG. 1(b), beach marks are made the approximate shape of concentric circles centered around the point of crack generation, at the portions of the fatigue fracture surface of the test piece where the load conditions have changed. The length of a crack that has developed under the above-mentioned first load conditions can be specified from the beach mark spacing.

Patent Document 1: Japanese Patent Application Laid-Open NO. H11-230880 Non-Patent Document 1: T. Kanazaki, C. Narazaki, Y. Mine, S. Matsuoka, and Y. Murakami, "Effect of hydrogen on fatigue crack growth in pre-strained austenitic stainless steel," Japan Society of Mechanical Engineers, No. 05-9, M&M 2005 Materials Science Symposium (Nov. 4-6, 2005, Fukuoka City), P86, pp. S95-996
Non-Patent Document 2: T. Kanazaki, C. Narazaki, Y. Mine, S. Matsuoka, and Y. Murakami, "Martensite morphology and effect of hydrogen on fatigue crack growth characteristics in stainless steel," Japan Society of Mechanical Engineers collected papers (A edition), Vol. 72, No. 723 (11-2006), pp. 123-130. (original received May 1, 2006)

With the fatigue test method discussed above, since crack growth has to be slowed down extremely much to make the beach marks, a crack length developed under the initial load conditions at which the crack substantially grows is all that can be acquired in a single fatigue test. Specifically, although crack growth under the initial load conditions can be confirmed from the fatigue fracture surface of the test piece, a problem is that crack growth under the later load conditions cannot be confirmed.

In particular, with a fatigue test such as this, an important goal is to acquire a fatigue crack growth curve that shows the relationship between the stress intensity factor range and the crack growth rate. However, as shown in FIG. 1(c), all that can be acquired in a single fatigue test is a fatigue crack growth curve for the initial cycle rate at which the crack grows (f₁ = 0.01 Hz). As for the later cycle rate (f₂ = 1 Hz), a fatigue crack growth curve has to be acquired at this cycle rate and by setting the number of cycles and the stress amplitude so that the crack will grow, and then conducting another fatigue test with a separate test piece, which is inefficient. Particularly when the load is imparted at a low frequency as in this example, the test takes an extremely long time, so there is a need for a technique with which various fatigue crack growth curves related to a plurality of cycle rates can be acquired in a single fatigue test.

### DISCLOSURE OF THE INVENTION

The present invention was conceived in light of this problem, and it is an object thereof to provide a technique with which various crack growth situations related to a plurality of load conditions can be confirmed in a single fatigue test, which is based on a phenomenon whereby the cycle rate (frequency) of a test is varied, which changes the effect that the hydrogen in the test piece (the hydrogen that has permeated the test piece and/or the hydrogen contained beforehand in the test piece) has on the growth of a crack, which forms different fatigue fracture surfaces. In particular, there is provided a technique for acquiring various fatigue crack growth curves related to a plurality of cycle rates in a single fatigue test.

The following means are employed in present invention to solve the above problems.
The first invention is a method for subjecting a test piece that either contains hydrogen or does not contain hydrogen to a fatigue test in a hydrogen gas atmosphere, wherein a first loading step of adding a load to the test piece in the hydrogen gas atmosphere under a first set of conditions comprising a specific stress amplitude, a specific cycle rate and a specific number of cycles at which a crack formed in the test piece grows, and a second load step of adding a load to the test piece in the hydrogen gas atmosphere under a second set of conditions comprising a specific stress amplitude, a specific cycle rate and a specific number of cycles at which the crack grows, with at least the cycle rate being different from that in the first set of conditions are alternately repeated, and a first crack length developed under the first set of conditions and a second crack length developed under the second set of conditions are each specified on the basis of a phenomenon whereby a change in the cycle rate results in the hydrogen in the test piece having a different effect on the crack growth, which results in different morphologies of the fatigue fracture surface.

As to the phrase "hydrogen in the test piece" used above: (I) if the test piece does did not contain any hydrogen beforehand, then this refers to hydrogen that permeates the test piece in a hydrogen gas environment and ends up being contained in the test piece; and (II) if the test piece did contain hydrogen beforehand, this refers to hydrogen that is already contained in the test piece, as well as hydrogen that permeates the test piece in a hydrogen gas environment and ends up being contained in the test piece. Specifically, this first invention can be applied both to a case in which the test piece is a hydrogen-charged material, and to an uncharged material.

The second invention is a method for subjecting a test piece that contains hydrogen to a fatigue test, wherein a first loading step of adding a load to the test piece under a first set of conditions comprising a specific stress amplitude, a specific cycle rate and a specific number of cycles at which a crack formed in the test piece grows, and a second load step of adding a load to the test piece under a second set of conditions comprising a specific stress amplitude, a specific cycle rate and a specific number of cycles at which the crack grows, with at least the cycle rate being different from that in the first set of conditions are alternately repeated, and a first crack length developed under the first set of conditions and a second crack length developed under the second set of conditions are each specified on the basis of a phenomenon whereby a change in the cycle rate results in the hydrogen in the test piece having a different effect on the crack growth, which results in different morphologies of the fatigue fracture surface.

The phrase "hydrogen in the test piece" used above refers to hydrogen that is already contained in the test piece. Specifically, this second invention can, of course, be applied to a case in which the test piece is a hydrogen-charged material, but even if the test piece is an uncharged material, the invention can be applied when the hydrogen content of the test piece is at least a specific amount (in the example given below, 2.6 wt ppm).

The third invention is the fatigue test method of the first or second invention, wherein the second set of conditions includes the same stress amplitude as the first set of conditions.

The fourth invention is the fatigue test method according to any of the first to third inventions, wherein a first fatigue crack growth curve that indicates a relationship between a crack growth rate and a stress intensity factor range under the first set of conditions is acquired on the basis of the specified first crack length and the first set of conditions, and a second fatigue crack growth curve that indicates a relationship between a crack growth rate and a stress intensity factor range under the second set of conditions is acquired on the basis of the specified second crack length and the second set of conditions.

In the air atmosphere in which a fatigue test is usually conducted, changes in the load cycle rate do not cause changes in the fatigue fracture surface. Accordingly, it is necessary to lower the crack growth rate and form beach marks of fretting oxide. Specifically, the growth of cracks had to be almost completely prevented for a considerable quantity of fretting oxide to be formed. Therefore, the only thing that could be confirmed in a single fatigue test was the growth of cracks related to the initial load conditions.

Meanwhile, a condition of the fatigue test method pertaining to the present invention is that hydrogen be present in the test piece. Also, the extent to which the hydrogen affects crack growth changes with the cycle rate is changed (the more the cycle rate decreases, the greater the effect of hydrogen). An area of large hydrogen effect and an area of small hydrogen effect can be made to appear alternately within the same fatigue fracture surface if the cycle rate is alternately varied. Since the fracture surface morphology, such as surface roughness, is different in the area of large hydrogen effect and the area of small hydrogen effect, the result is that a striped pattern is formed. Specifically, it is possible for a plurality of load conditions to be conditions under which cracks grow, and various crack lengths can be specified that relate to a plurality of cycle rate conditions in a single fatigue test.

In the past, because it was necessary to form a fretting oxide, the making of beach marks was limited to cases when it was carried out in an oxidative atmosphere, such as the air. However, since there is no oxygen in high-purity hydrogen gas, no fretting oxide film is formed. This means that a replica method or the like had to be used to check the crack growth in a hydrogen gas atmosphere in which no fretting oxide was formed. To make use of a replica method, though, it is necessary to remove the hydrogen at regular intervals, open up the pressure vessel, and refill with hydrogen after replica collection, and this procedure had to be repeated a number of times.

This work is complicated, and the effect that the work had on experiment results has to be taken into account. Also, it takes a very long time to remove and replace the high-pressure hydrogen gas, and there are also safety issues. On the other hand, if a window for viewing the fracture surface is provided to the vessel so that the test piece does not have to be taken out and replaced, because the test piece is located far away from the viewing window, an extremely long focal distance is necessary with an optical microscope, and this poses technological problems. Furthermore, using a crack growth measurement method that involves an unloading elastic compliance method, in which a clip gauge, strain gauge, or the like is used, results in diminished accuracy because the hydrogen degrades these gauges and changes the values. Also, because electricity flows, means must be employed for preventing explosion.

With the present invention, however, there is no need to form a fretting oxide. Specifically, even when the fatigue test is conducted in a hydrogen gas atmosphere, it is possible to specify the various crack lengths related to a plurality of cycle rate conditions on the basis of differences in fatigue fracture surface morphologies. Consequently, there is no need to remove and replace the test piece in a hazardous environment such as a high-pressure hydrogen atmosphere, nor is it necessary for the high-pressure hydrogen gas to be removed and replaced, so there are advantages in cost and safety.

From this standpoint, the present invention is particularly effective in tests conducted in the high-pressure hydrogen gas environments required by fuel cell vehicles that are being developed (the pressure of the hydrogen gas is currently 35 MPa, but is projected to reach 70 MPa in the future). In a test such as these, since the high-pressure hydrogen gas is enclosed in a thick-walled pressure vessel, it is difficult to use conventional optical or electrical crack length measurement techniques, but with the present invention, it is possible to specify the various crack lengths related to a plurality of cycle rate conditions, even under an environment such as this, and there is no need for the test piece to be removed and replaced, etc., nor is it necessary for the high-pressure hydrogen gas to be removed and replaced, so there are advantages in cost and safety.

Also, in the past, the growth of cracks had to be almost completely prevented in order to form a fretting oxide, so the stress amplitude was reduced in almost every case, but it is known that a large change in stress amplitude greatly affects the fatigue crack length immediately thereafter. Specifically, since crack growth immediately after a large change in stress amplitude is not dependent solely on the load conditions, it was difficult to confirm the exact crack growth situation.

With the present invention, however, there is no need to form a fretting oxide. Specifically, since it is unnecessary to vary the stress amplitude, the exact crack growth situation related to the load conditions can be confirmed.

Furthermore, with the present invention, it is possible to specify various crack lengths related to a plurality of load conditions in a single fatigue test, so it is possible to acquire various fatigue crack growth curves related to the plurality of conditions, which contributes significantly to greater efficiency in fatigue testing.

### BRIEF DESCRIPTION OF THE DRAWINGS

FIG. 1 is a diagram giving an overview of a conventional fatigue test method;
FIG. 2(a) is a diagram of the dimensions of a fatigue test piece, and FIG. 2(b) is a diagram of the dimensions of a manmade microscopic hole provided to a fatigue test piece;
FIG. 3 is an example of a fatigue crack generated from a manmade microscopic hole;
FIG. 4 shows graphs of the relationship between the number of cycles and the crack length in a fatigue test, with FIG. 4(a) showing the test results for SUS 304, FIG. 4(b) those for SUS 316, and FIG. 4(c) those for SUS 316L;
FIG. 5 is a graph of the relationship between the number of cycles and the crack length in a fatigue test of SUS 316L;
FIG. 6 is a graph of the relationship between the number of cycles and the crack length in a fatigue test of SUS 316L, and is a graph of the relationship after the crack length has reached 200 µm;
FIG. 7 is a diagram giving an overview of the fatigue test method of the present invention;
FIG. 8(a) is a diagram showing the loading change in a fatigue test conducted in a hydrogen atmosphere using hydrogen-charged SUS 304, FIG. 8(b) shows the fatigue fracture surface in this same fatigue test, and FIG. 8(c) is a graph of the relationship between the number of cycles and crack length;
FIG. 9 is a photograph of the fatigue fracture surface when hydrogen-charged SCM 435 has undergone a fatigue test in the air;
FIG. 10 is a graph of the fatigue crack growth curve when hydrogen-charged and uncharged SCM 435 has undergone a fatigue test in the air; and
FIG. 11 is a graph of the hydrogen content in hydrogen-charged and uncharged austenitic stainless steel (SUS 316L) .

### BEST MODE FOR CARRYING OUT THE INVENTION

### 1. Effect of Hydrogen Contained in Test Piece

First, the effect that the hydrogen contained in a test piece has on fatigue crack growth will be described.

Hydrogen is known to permeate a metal material and lower its static strength and fatigue strength (see the above-mentioned Non-Patent Documents 1 and 2, for example). The inventors of the present invention conducted the following experiment, and confirmed how much effect the hydrogen contained in a test piece has on the growth rate of fatigue cracks.

### Test Piece

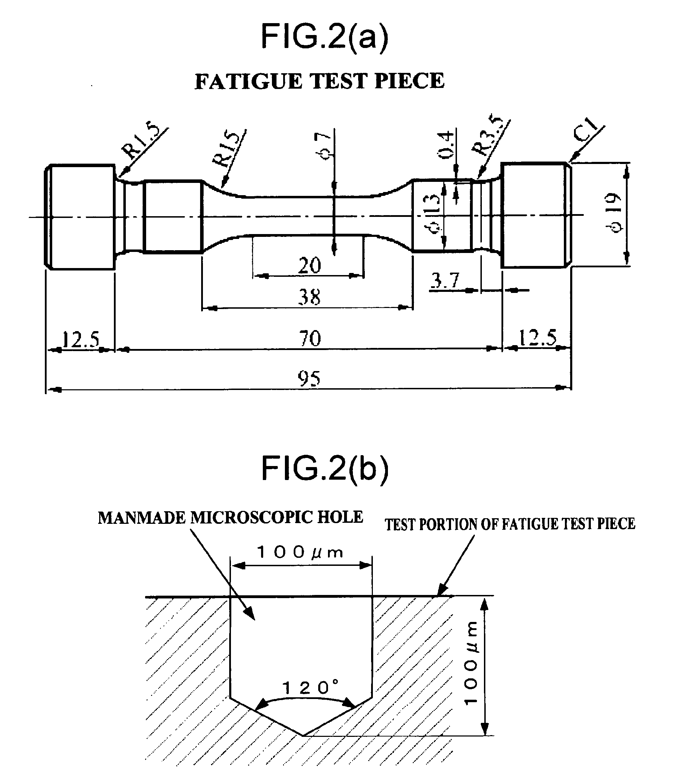

The materials used were austenitic stainless steel SUS 304, SUS 316, and SUSU 316L (A) (hereinafter referred to simply as SUSU 316L). SUS 304, SUS 316, and SUSU 316L that had undergone solid solution treatment were used. FIG. 2(a) shows the shape of the test piece. The surface of the test piece was polished with a #2000 emery cloth, then finished by buffing. Two kinds of test piece were prepared, those that had been hydrogen-charged (see below) and those that had not.

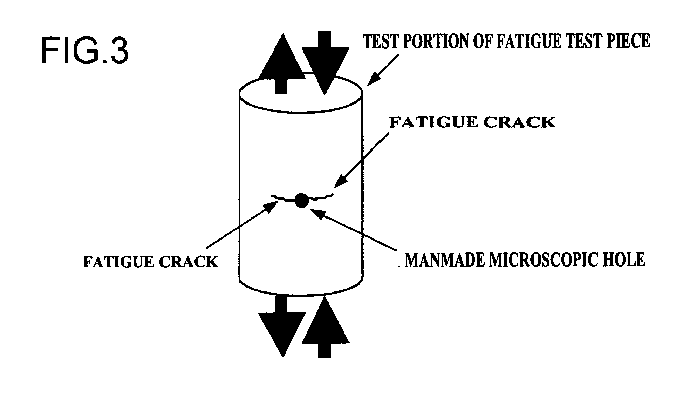

In order to facilitate observation of the fatigue crack growth, as shown in FIG. 2(b), a manmade microscopic hole with a diameter of 100 µm and a depth of 100 µm was made with a drill having a tip angle of 120 degrees, in the center of the test piece in its lengthwise direction and perpendicular to the lengthwise direction. The test portion is the cylindrical portion in the middle of the test piece shown in FIG. 2(a), and the length of this cylinder is approximately 20 mm. The top and bottom faces of this cylinder are parallel, and are perpendicular to the axis of the test piece in the lengthwise direction. FIG. 3 is an overview of the test portion. It shows an example of the direction of the loading applied to the test piece, and a fatigue crack generated from the manmade microscopic hole. In the case of a hydrogen-charged test piece, the piece was buffed again and the manmade microscopic hole drilled immediately upon completion of the hydrogen charging.

### Hydrogen Charging Method

The hydrogen charging was performed by cathode charging method. The conditions of the hydrogen charging comprised a sulfuric acid aqueous solution with a pH of 3.5, a platinum anode, and a current density of i = 27 A/m². When the solution temperature was 50°C (323 K), the hydrogen charging took 672 hours (4 weeks), and when the temperature was 80°C (353 K), it took 336 hours (2 weeks). The sulfuric acid aqueous solution was replaced once a week to reduce changes in sulfuric acid concentration due to evaporation.

### Fatigue Test Method

The fatigue test was conducted at a cycle rate of 0.0015 to 5 Hz and a stress ratio R of -1. The cycle rate was adjusted so that the test portion surface temperature would not exceed 60°C during the fatigue test. The fatigue crack was observed by replica method, and the length of the fatigue crack was measured.

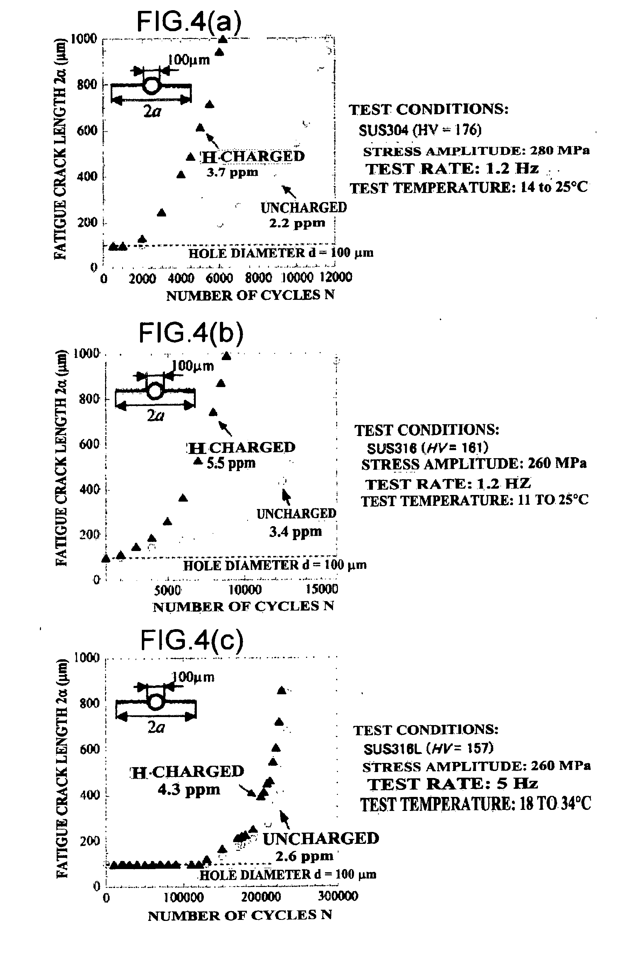

FIG. 4 is a graph of the relationship between the number of cycles and the crack length in the fatigue test. FIG. 4(a) shows the test results for SUS 304, FIG. 4(b) those for SUS 316, and FIG. 4(c) those for SUS 316L. The SUS 304, SUS 316, and SUS 316L materials were compared when charged with hydrogen and when not charged with hydrogen. The cycle rate was 1.2 Hz with SUS 304 and SUS 316, and was 5 Hz with SUS 316L.

FIG. 4 tells us that the crack grows faster in hydrogen-charged SUS 304 and SUS 316 than when these are not charged with hydrogen. For example, the number of cycles N required for the crack length 2a to reach 400 µm is clearly less with hydrogen charging than without hydrogen charging. In this example, the fatigue crack growth rate with hydrogen charging is about twice as fast as without hydrogen charging. With SUS 316L, meanwhile, the fatigue crack growth rate with hydrogen charging is slightly slower than without hydrogen charging.

It was confirmed from these results that when the fatigue test is conducted at a cycle rate of a few Hz or less (5 Hz, 1.2 Hz), the hydrogen charged into the test piece affects the fatigue crack growth rate.

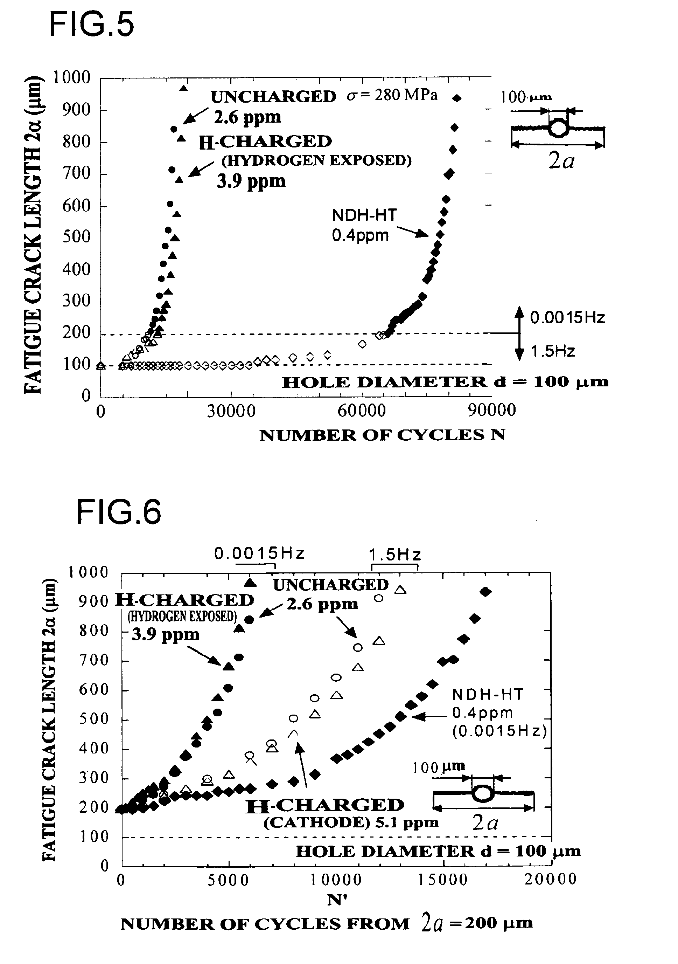

FIG. 5 is a graph of the results of the fatigue test using SUS 316L. This graph shows the fatigue test results for two materials that had not undergone hydrogen charging and whose hydrogen content was 0.4 wt ppm and 2.6 wt ppm, and for a material whose hydrogen content had been 2.6 wt ppm prior to hydrogen charging and rose to 3.9 wt ppm after hydrogen charging. The cycle rate was 1.5 Hz until the length of the fatigue crack reached 200 µm. Once the length of the fatigue crack reached 200 µm, the cycle rate was changed from 1.5 Hz to 0.0015 Hz.

The materials with a hydrogen content of 2.6 wt ppm and 3.9 wt ppm require about 10,000 cycles until the length of the fatigue crack reaches 200 µm, but the material with a hydrogen content of 0.4 ppm requires over 60,000, so it is safe to say that there is a clear difference between the two. This result confirms that the crack growth rate is higher for the materials with a hydrogen content of 2.6 wt ppm and 3.9 wt ppm than with the material with a hydrogen content of 0.4 wt ppm.

FIG. 6 is a graph of the results of the fatigue test with SUS 316L. This graph shows the fatigue test results for two materials that had not undergone hydrogen charging and whose hydrogen content was 0.4 wt ppm and 2.6 wt ppm, and for a material whose hydrogen content had been 2.6 wt ppm prior to hydrogen charging and rose to 3.9 wt ppm after hydrogen charging, as well as for a material whose hydrogen content had similarly been 2.6 wt ppm prior to hydrogen charging and rose to 5.1 wt ppm after hydrogen charging. There were two different cycle rates: 1.5 Hz and 0.0015 Hz.

A comparison at a cycle rate of 0.0015 Hz confirmed that the materials with a hydrogen content of 5.1 wt ppm and 2.6 wt ppm had a faster crack growth rate than the material with a hydrogen content of 0.4 wt ppm. A comparison of materials with a hydrogen content of 2.6 wt ppm confirmed that at a cycle rate of 0.0015 Hz the crack growth rate was faster than at a cycle rate of 1.5 Hz.

### Relationship Between Fatigue Test Rate and Fatigue Crack Growth Rate

It was confirmed from the experiment results shown in FIGS. 5 and 6 that if the hydrogen content of the test piece is a constant value or more (about 2.6 wt ppm in this example), it will affect the fatigue crack growth rate, regardless of whether or not the material was charged with hydrogen. It was also confirmed that the slower is the cycle rate, the faster is the fatigue crack growth rate. With this mind, a specific example of the present invention will now be described.

### 2. Fatigue Test Method of the Present Invention

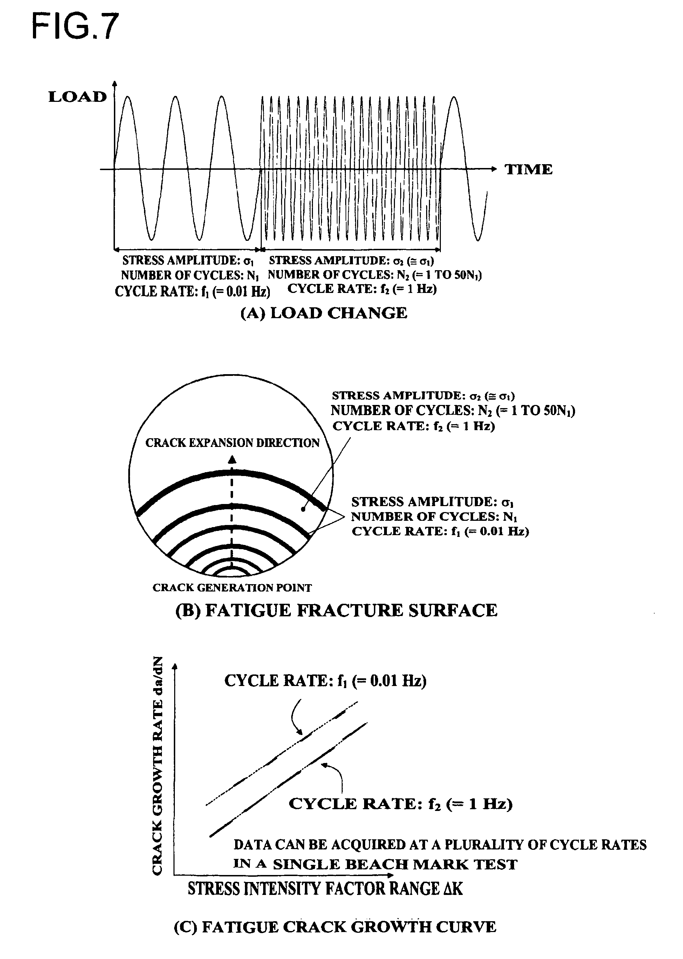

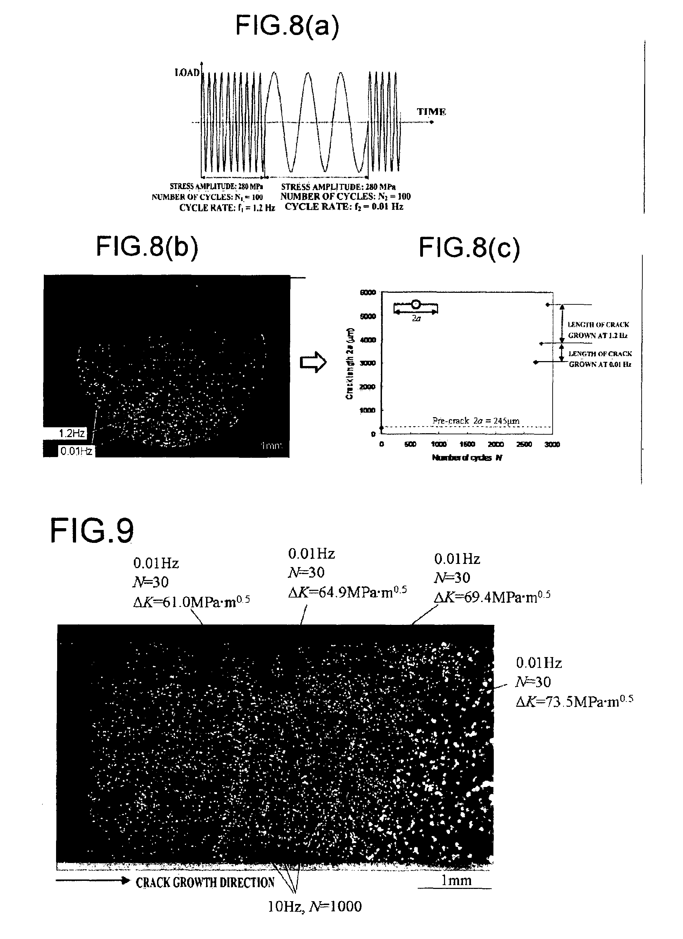

The fatigue test method pertaining to the present invention will now be described through reference to the drawings. First, an overview of the fatigue test method of the present invention will be given using FIG. 7, and then a test example of applying the fatigue test method of the present invention will be described using FIGS. 8 to 11.

The present invention takes advantage of the fact that the effect that hydrogen has on fatigue crack growth is a function of the cycle rate. FIG. 7(a) shows an example of the load applied to the test piece. In this example, a load was first applied to the test piece under a first set of conditions comprising a stress amplitude σ₁, a cycle rate f₁ (= 0.01 Hz), and a number of cycles N₁, after which a load was applied under a second set of conditions comprising a stress amplitude σ₂ (≅ σ₁), a cycle rate f₂ (= 1 Hz), and a number of cycles N₂ (= 1 to 50N₁). The second set of conditions differs from the first set of conditions in at least its cycle rate.

The load was alternately applied under the first set of conditions and the second set of conditions, until the test piece fractured. Here, as mentioned above, if the hydrogen content of the test piece is a constant value or more, it will affect the fatigue crack growth rate, and the slower is the cycle rate, the faster is the fatigue crack growth rate. Therefore, when at the cycle rate f₁ in conditions 1 of 0.01 Hz, hydrogen has a greater effect on crack growth than at the cycle rate f₂ in conditions 2 of 1 Hz. As a result, an area of large hydrogen effect (an area developed at the cycle rate f₁) and an area of small hydrogen effect (an area developed at the cycle rate f₂) appear alternately on the fatigue fracture surface, and since these two areas have different fracture surface morphologies, it is possible to see the boundary lines.

Specifically, as shown in FIG. 7(b), beach marks in the form of substantially concentric stripes are made around the crack generation point (the beach marks referred to here are not produced by fretting oxide, but are instead boundary lines that are visible on the basis of different fracture surface morphologies). In this example, the range surrounded by the first beach mark and the second beach mark, in the direction in which the crack expands from the crack generation point, is the range of the crack grown under a first set of conditions. In the drawing, this is indicated by the range that is filled in with black.

The range surrounded by the second beach mark and the third beach mark is the range of the crack grown under a second set of conditions. In the drawing, this range is sandwiched between ranges filled in with black. The crack then grows alternately under the first set of conditions and the second set of conditions, and if we let the odd numbers be n (1, 3, 5, ...) and the even numbers be m (2, 4, 6, ...), then the range surrounded by the n-th beach mark and the n+1-th beach mark is specified as the range of the crack grown under the first set of conditions (hereinafter referred to as the "first range"), and the range surrounded by the m-th beach mark and the m+1-th beach mark is specified as the range of the crack grown under the second set of conditions (hereinafter referred to as the "second range").

It is possible to specify the length of a crack grown under the first set of conditions from the spacing between the n-th beach mark and the n+1-th beach mark, and it is possible to specify the length of a crack grown under the second set of conditions from the spacing between the m-th, beach mark and the m+1-th beach mark.

Also, as shown in FIG. 7(b), when a plurality of the first and second ranges appear alternately, there are a plurality of lengths of cracks grown under the first set of conditions, and there are also a plurality of lengths of cracks grown under the second set of conditions. Therefore, as shown in FIG. 7(c), for the first set of conditions, a plurality of relationships of the stress intensity factor range ΔK and the crack growth rate da/dN can be obtained, and as a result, for the cycle rate pertaining to the first set of conditions (f₁ = 0.01 Hz), a fatigue crack growth curve indicating the relationship between the stress intensity factor range ΔK and the crack growth rate da/dN can be estimated. Also, as shown in FIG. 7(c), for the second set of conditions, a plurality of relationships of the stress intensity factor range ΔK and the crack growth rate da/dN can be obtained, and as a result, for the cycle rate pertaining to the second set of conditions (f₂ = 1 Hz), a fatigue crack growth curve indicating the relationship between the stress intensity factor range ΔK and the crack growth rate da/dN can be estimated.

Since various fatigue crack growth curves for the various cycle rates can thus be obtained by varying the cycle rate in a single fatigue failure test, it is possible to conduct a fatigue test more efficiently.

### 3. Test Example 1 (fatigue test in a hydrogen gas atmosphere)

A test example of applying the fatigue test method of the present invention in a hydrogen gas atmosphere will now be described through reference to FIG. 8. The test piece used here is SUS 304 that has been charged with hydrogen. A crack with a length 2a of 245 µm is formed ahead of time in the middle of the surface of each test piece. This fatigue test is conducted in a hydrogen atmosphere.

As shown in FIG. 8(a), loading of the test piece was carried out alternately under a first set of conditions (stress amplitude σ₁ = 280 MPa, stress ratio R = -1, cycle rate f₁ = 1.2 Hz, number of cycles N₁ = 100) and a second set of conditions (stress amplitude σ₂ = σ₁ = 280 MPa, stress ratio R = -1, cycle rate f₂ = 0.01 Hz, number of cycles N₂ = N₁ = 100).

After the fatigue fracture of the test piece, the fatigue fracture surface was examined with an optical microscope, and as a result, as shown in FIG. 8(b), different cycle rates produced different fracture surface morphologies within the same fatigue fracture surface, and the boundary lines between these were visible as beach marks.

As a result, as shown in FIG. 8(b), the length of cracks grown under various conditions can be specified. FIG. 8(c) shows the relationship between the cycle rate and the crack length in this experiment. The initial value of the crack length is 245 µm, and the crack grows gradually upon alternate application of load under the first and second sets of conditions. The first beach mark appeared at a total number of cycles of 2700, the second beach mark appeared at 2800 cycles, and the third beach mark appeared at 2900 cycles. The length of the crack grown between 2700 and 2800 cycles corresponds to the crack length under the second set of conditions, namely, when the cycle rate f₂ was 0.01 Hz, and the length of the crack grown between 2800 and 2900 cycles corresponds to the crack length under the first set of conditions, namely, when f₁ was 1.2 Hz.

Thus, with the present invention, since there is no need to form a fretting oxide, even when a fatigue test is conducted in the hydrogen gas atmosphere of this example, it is possible to specify various crack lengths related to a plurality of load conditions on the basis of differences in fatigue fracture surface morphologies. Consequently, the work of removing the hydrogen at regular intervals during testing in a high-pressure hydrogen atmosphere, opening up the pressure vessel, and refilling with hydrogen after replica collection does not have to be carried out over and over, so there are advantages in cost and safety.

Furthermore, it is possible to acquire a fatigue crack growth curve that shows the relationship between the stress intensity factor range and the crack growth rate in relation to first and second sets of conditions by specifying the crack length.

A hydrogen-charged material was used as the test piece in the above example, but even with an uncharged material, hydrogen will infiltrate the test piece in a hydrogen gas atmosphere, and this hydrogen will end up being contained in the test piece, so the above-mentioned test method can still be applied. Also, even with an uncharged material, hydrogen is sometimes present to start with from the time the steel was manufactured, and if the hydrogen content is high enough for the hydrogen to affect the growth of fatigue cracks, then the present invention can be applied regardless of any infiltration by hydrogen.

### 4. Test Example 2 (fatigue test in the air)

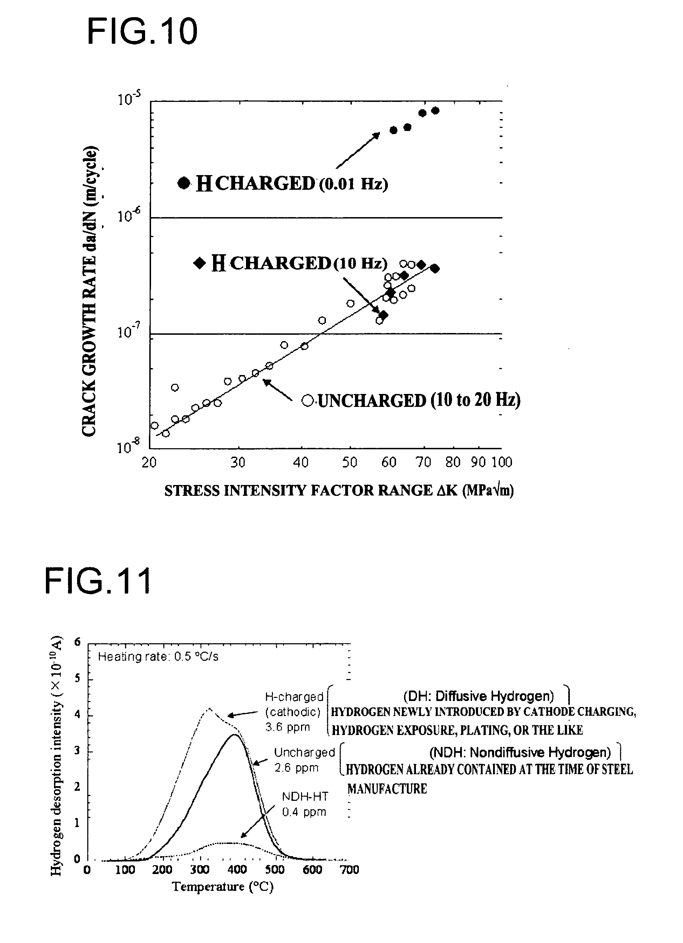

A test example of applying the fatigue test method of the present invention in the air (an oxidative atmosphere) will now be described through reference to FIGS. 9 and 10. The test piece used here is hydrogen-charged SCM 435.

Loading of the test piece was carried out alternately under a first set of conditions (stress amplitude σ₁ = 40 MPa, stress ratio R = 0, cycle rate f₁ = 0.01 Hz, number of cycles N₁ = 30) and a second set of conditions (stress amplitude σ₂ = 40 MPa, stress ratio R = 0, cycle rate f₂ = 10 Hz, number of cycles N₂ = 1000). The stress amplitude in the second set of conditions was the same as in the first set of conditions, but the cycle rate was different.

After the fatigue fracture of the test piece, the fatigue fracture surface was examined with an optical microscope, and as a result, as shown in FIG. 9, different cycle rates produced different fracture surface morphologies within the same fatigue fracture surface, and the boundary lines between these were visible as beach marks.

As a result, as shown in FIG. 9, the length of cracks grown under various conditions can be specified. Furthermore, because crack length can be specified, it is also possible to specify the stress intensity factor range ΔK (MPa√m) and the crack growth rate da/dN (m/cycle) related to each set of conditions. Specifically, it is possible to acquire a fatigue crack growth curve indicating the relationship between the stress intensity factor range and the crack growth rate for each of the first and second sets of conditions.

FIG. 10 shows the resulting fatigue crack growth curve related to the first set of conditions (cycle rate of 0.01 Hz) and the fatigue crack growth curve related to the second set of conditions (cycle rate of 10 Hz). Thus, since it is possible to specify each crack length related to a plurality of cycle rates (0.01 Hz and 10 Hz) in a single fatigue test, it is possible to acquire a fatigue crack growth curve for each, and this greatly improves the efficiency of the fatigue test. Furthermore, with the present invention, since there is no need to vary the stress amplitude between a plurality of sets of conditions, an accurate fatigue crack growth curve related to each cycle rate can be acquired.

With a test piece that has not undergone hydrogen charging, just as with the above-mentioned hydrogen-charged material, it is possible to acquire a fatigue crack growth curve that shows the relationship between the stress intensity factor range and the crack growth rate for each of the first and second sets of conditions. As shown in FIG. 11, hydrogen introduced during steel manufacture is present in an amount of about 2.6 wt ppm in austenitic stainless steel such as SUS 304. The amount of hydrogen contained is sufficient to affect the growth of fatigue cracks, as mentioned above. When the cycle rate is changed, the effect that the originally contained hydrogen affects fatigue crack growth also changes, areas of large hydrogen effect and areas of small hydrogen effect appear alternately, and since the two areas have different fracture surface morphologies, the boundaries between them are visible.

### INDUSTRIAL APPLICABILITY

The present invention can be utilized in the fatigue testing of hydrogen-charged or uncharged materials conducted in a hydrogen gas atmosphere. Also, it can be utilized in the fatigue testing of hydrogen-charged or uncharged materials having at least a specific hydrogen content in an oxidative atmosphere. This technology is particularly useful in the field of metals manufacture (manufacturing iron and steel materials used under hydrogen environments, etc.) and in the field of constructing a hydrogen infrastructure.

## Claims

1. A method for subjecting a test piece that either contains hydrogen or does not contain hydrogen to a fatigue test in a hydrogen gas atmosphere,
wherein
a first loading step of adding a load to the test piece in the hydrogen gas atmosphere under a first set of conditions comprising a specific stress amplitude, a specific cycle rate and a specific number of cycles at which a crack formed in the test piece grows, and
a second load step of adding a load to the test piece in the hydrogen gas atmosphere under a second set of conditions comprising a specific stress amplitude, a specific cycle rate and a specific number of cycles at which the crack grows, with at least the cycle rate being different from that in the first set of conditions
are alternately repeated, and
a first crack length developed under the first set of conditions and a second crack length developed under the second set of conditions are each specified on the basis of a phenomenon whereby a change in the cycle rate results in the hydrogen in the test piece having a different effect on the crack growth, which results in different morphologies of the fatigue fracture surface.

2. A method for subjecting a test piece that contains hydrogen to a fatigue test,
wherein
a first loading step of adding a load to the test piece under a first set of conditions comprising a specific stress amplitude, a specific cycle rate and a specific number of cycles at which a crack formed in the test piece grows, and
a second load step of adding a load to the test piece under a second set of conditions comprising a specific stress amplitude, a specific cycle rate and a specific number of cycles at which the crack grows, with at least the cycle rate being different from that in the first set of conditions
are alternately repeated, and
a first crack length developed under the first set of conditions and a second crack length developed under the second set of conditions are each specified on the basis of a phenomenon whereby a change in the cycle rate results in the hydrogen in the test piece having a different effect on the crack growth, which results in different morphologies of the fatigue fracture surface.

3. The fatigue test method according to Claim 1 or 2,
wherein the second set of conditions includes the same stress amplitude as the first set of conditions.

4. The fatigue test method according to any of Claims 1 to 3,
wherein a first fatigue crack growth curve that indicates a relationship between a crack growth rate and a stress intensity factor range under the first set of conditions is acquired on the basis of the specified first crack length and the first set of conditions, and
a second fatigue crack growth curve that indicates a relationship between a crack growth rate and a stress intensity factor range under the second set of conditions is acquired on the basis of the specified second crack length and the second set of conditions.
